# EUROPEAN PATENT APPLICATION

(11) **EP 3 597 838 A1**
(43) Date of publication of application: **22.01.2020**
(21) Application number: 18744983.0
(22) Date of filing: 30.01.2018
(51) Int. Cl.: E04G 5/08, E04G 5/00

(54) **SCAFFOLDING PLATE, FALLING OBJECT RECEPTION DEVICE, AND PANEL FOR FALLING OBJECT RECEPTION DEVICE**

(30) Priority: 30.01.2017 JP 2017014848
(71) Applicant: Takemoto, Naofumi, Tokyo 105-0011 (JP)
(72) Inventor: Takemoto, Naofumi, Tokyo 105-0011 (JP)
(74) Representative: Maiwald Patent- und Rechtsanwaltsgesellschaft mbH
(86) International application number: PCT/JP2018/003049
(87) International publication number: WO 2018/139674

(57) **Abstract**

A scaffold board is provided, which includes a board serving as a scaffold and a polyurea resin layer that covers at least a front surface of surfaces of the board. A falling object receiving device is provided, which includes a panel part that projects from a scaffold construction body toward an external space and an attachment part that attaches a proximal end side of the panel part to the scaffold construction body. The panel part has a base material of foamed synthetic resin and a coating layer of polyuria resin that covers a surface of the base material.

## Description

### TECHNICAL FIELD

The present invention relates to a scaffold board, a falling object receiving device and a falling object receiving device panel.

As a scaffold for construction, a scaffold stand coated with a coating material containing melamine resin on a surface of an aluminum material is known (for example, Patent Literature 1). Further, a technique to form polyurea on a surface of an aluminum material is known (for example, Patent Literature 2). Furthermore, there is known a scaffold in which a sheet material is provided on a surface of a working plate in a replaceable manner (for example, Patent Literature 3).

Further, there is known a falling object receiving device that receives a falling object when the object falls from a work space to an outside space during work at a high place in the work space on a temporary scaffold, thereby preventing the falling object from falling to the ground. The falling object receiving device is called a morning glory device (for example, Patent Literature 4).

### [PATENT LITERATURE]

Patent Literature 1: JP 2011-247052 A
Patent Literature 2: JP 9-314050 A
Patent Literature 3: JP 10-018585 A
Patent Literature 4: JP 2010-126962 A

### [PROBLEM TO BE SOLVED]

It is preferable that a scaffold board and a falling object receiving device be lightweight and have surfaces that are not easily damaged.

### SUMMARY

The first aspect of the present invention provides a scaffold board. The scaffold board may include a board serving as a scaffold. The scaffold board may include a polyurea resin layer. The polyurea resin layer may cover at least a front surface of surfaces of the board.

The board may be formed of a metal material. The metal material may be an aluminum material. The metal material may be a steel material. The board may be formed of wood. Alternatively, the board may be formed of foamed synthetic resin. The foamed synthetic resin may be provided with a hook member. The hook member may be formed of metal or reinforced plastic so as to fix the board to an external scaffold construction body.

The scaffold board may further include a primer coating. The primer coating may be formed on a surface of the metal material. The primer coating may be formed on a surface of the foamed synthetic resin. The primer coating may be formed on a surface of the wood. The polyurea resin layer may be formed on a surface of the primer coating.

The scaffold board may include a sheet member. The sheet member may be removably attached to a surface of the board. The sheet member may have a base material of foamed synthetic resin and a coating layer covering a surface of the base material. The polyurea resin layer may be formed as the coating layer.

Uneven portions for slip prevention may be formed on a front surface of the sheet member.

The coating layer may be formed on all surfaces of the base material.

The board may have a guide mechanism into which the sheet member is inserted.

A second aspect of the present invention provides a falling object receiving device. The falling object receiving device may include a panel part. The panel part may project from a scaffold construction body toward an external space. The falling object receiving device may include an attachment part. The attachment part may attach a proximal end side of the panel part to the scaffold construction body. The panel part may have a base material. The base material may be formed of foamed synthetic resin. The panel part may have a coating layer. The coating layer may cover a surface of the base material. The coating layer may be formed of polyurea resin.

The attachment part may attach the proximal end side of the panel part to the scaffold construction body in a vertically pivotable manner.

The coating layer may be formed on all surfaces of the base material of the panel part.

The coating layer may have a first polyurea resin layer. The first polyurea resin layer may be applied to the surface of the base material. The first polyurea resin layer may exhibit a first elongation rate. The coating layer may have a second polyurea resin layer. The second polyurea resin layer may be applied to a surface of the first polyurea resin layer. The second polyurea resin layer may exhibit a second elongation rate. The second elongation rate may be higher than the first elongation rate.

A third aspect of the present invention may provide a falling object receiving device panel. The falling object receiving device panel may project from a scaffold construction body toward an external space. The falling object receiving device panel may include a base material. The base material may be formed of foamed synthetic resin. The falling object receiving device panel may include a coating layer. The coating layer may cover a surface of the base material. The coating layer may be formed of polyurea resin.

Note that the above summary of the invention does not enumerate all the necessary features of the present invention. In addition, any sub-combination of these feature groups can also be an invention.

### BRIEF DESCRIPTION OF THE DRAWINGS

Fig. 1 is a view illustrating a part of scaffold construction bodies 1 framed at a construction work site.
Fig. 2 is a plan view illustrating a scaffold board of a first embodiment of the present invention.
Fig. 3 is a side view illustrating the scaffold board of the first embodiment.
Fig. 4 is a view illustrating a fully retractable scaffold board.
Fig. 5 is a plan view illustrating a scaffold board 150 of a second embodiment of the present invention.
Fig. 6 is a view illustrating a case where a sheet member is inserted into the scaffold board 150 of the second embodiment.
Fig. 7 is a view illustrating a partial cross-sectional view of the sheet member.
Fig. 8 is a view illustrating a falling object receiving device of a third embodiment of the present invention.
Fig. 9 is a view illustrating a partial cross-sectional view of a falling object receiving device panel.

### DESCRIPTION OF EXEMPLARY EMBODIMENTS

Hereinafter, the present invention will be described through embodiments of the invention, but the following embodiments do not limit the invention according to the claims. In addition, not all combinations of features described in the embodiments are essential to the solution of the invention.

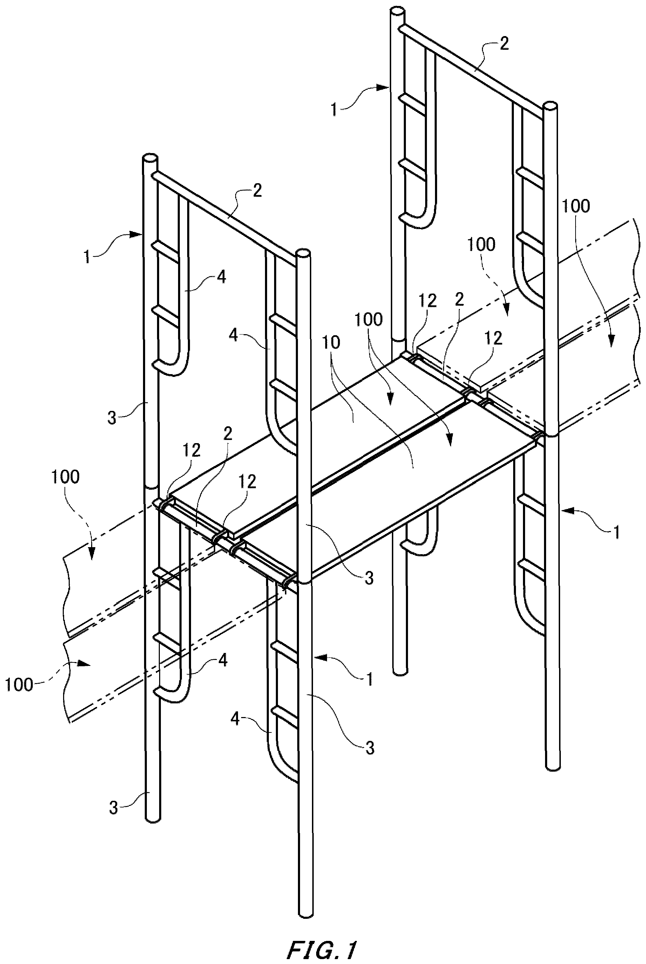

Fig. 1 is a view illustrating a part of scaffold construction body 1 at a construction work site. A scaffold construction body 1 includes a cross member 2, vertical members 3, and reinforcement members 4. The cross member 2 is connected between the pair of vertical members 3. The reinforcement members 4 reinforce corners where the cross member 2 and the vertical members 3 are connected. The scaffold construction bodies 1 are joined to form a plurality of vertical stages. However, the scaffold construction body 1 is not limited to the case of Fig. 1. A scaffold board 100 is bridged across cross members 2, 2 of opposing scaffold construction bodies 1, 1 provided upright at regular intervals to provide a working passage. In one example, scaffold boards 100 are bridged across cross members 2, 2 in parallel in pairs. The scaffold board 100 includes a scaffold body 10 and hook members 12.

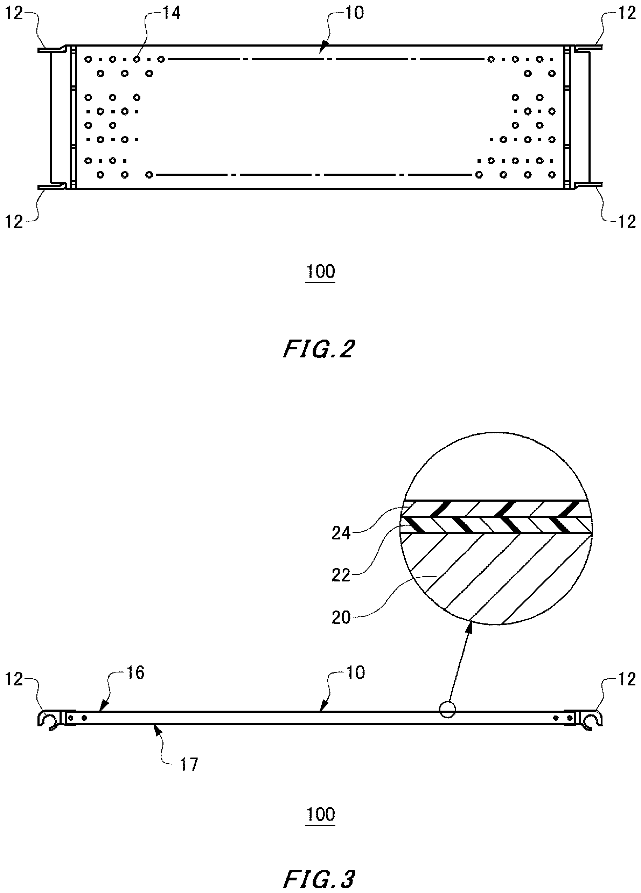

Fig. 2 is a plan view illustrating a scaffold board 100 of a first embodiment of the present invention. A scaffold body 10 of the scaffold board 100 forms a board serving as a scaffold. In the present example, a surface of the board is covered with a polyurea resin layer. The scaffold body 10 may have a rectangular shape. The board formed by the scaffold body 10 need not necessarily be flat. An uneven portion 14 for slip prevention may be provided on a front surface of the board. On a back surface of the board, reinforcement parts may be provided in a form of parallel crosses as described later. In the scaffold body 10, a surface on which a worker stands will be referred to as a front surface, and a surface opposite to the front surface will be referred to as a back surface.

Each side end in a width direction of the scaffold body 10 may be formed to have a U-shaped cross section. A direction orthogonal to a longitudinal direction of the scaffold body 10 is the width direction. A hook member 12 is provided at each end in the longitudinal direction of the scaffold body 10. One hook member 12 may be provided at each corner of ends in the longitudinal direction of the scaffold body 10. The hook member 12 may project from the end in the longitudinal direction of the scaffold body 10. The hook members 12 are hooked from above and fixed to the cross member 2 of the scaffold construction body 1. The hook members 12 may be biased by a spring. However, the method of fixing the scaffold board 100 and the scaffold construction body 1 is not so limited.

Fig. 3 is a side view illustrating the scaffold board 100 of the first embodiment. In Fig. 3, a partially enlarged cross section of a side portion of the scaffold board 100 is illustrated together for description. The scaffold body 10 includes a board 20 and a polyurea resin layer 24 to be a scaffold. The polyurea resin layer 24 covers at least a front surface 16 of the surface of the board 20. The cases of covering the front surface 16 of the board 20 include not only a case of covering the whole of the front surface 16 but also a case of covering a central portion of the front surface 16 excluding edge portions.
The board 20 may be formed of a metal material such as an aluminum material or a steel material. Alternatively, the board 20 may be formed of wood.

The board 20 may be formed of foamed synthetic resin. The synthetic resin forming the board 20 as an example is a polymer compound. As a more specific example, the synthetic resin forming the board 20 is formed of one or more materials selected from polystyrene, polyethylene, polypropylene, and polyurethane. The foamed synthetic resin refers to one in which fine bubbles are dispersed in these synthetic resins. In one embodiment, the base material 60 is formed of foam polystyrene (expanded polystyrene).

In order to fix the board 20 to the external scaffold construction body 1, hook members 12 formed of metal or reinforced plastic may be provided on the board 20 of foamed synthetic resin. The hook members 12 may be provided on the board 20 by insert molding so that one end thereof is embedded in the foamed synthetic resin. One end to be embedded may be bent inside the foamed synthetic resin. The bent portion functions as an anchor, which makes it difficult for the hook member 12 to be removed from the foamed synthetic resin. However, the connection between the hook member 12 and the foamed synthetic resin is not limited to this case. As an example, the hook member 12 may be attached to the board 20 via a connecting member that fixes the front surface 16 and a back surface 17 of the board 20 formed of foamed synthetic resin so as to sandwich the front surface 16 and the back surface 17. In this case, the polyurea resin layer 24 may cover the connecting member. When the board 20 is formed of foamed synthetic resin, the polyurea resin layer 24 is preferably formed on all surfaces of the board 20. Thus, sufficient strength and durability as the scaffold board 100 can be secured.

When the board 20 is formed of an aluminum material as a main material of the scaffold body 10, weight reduction of the scaffold board 100 can be achieved. Since at least the front surface 16 of surfaces of the board 20 is covered with the polyurea resin layer 24, it is possible to provide the scaffold board 100 which is ultra-lightweight and excellent in strength, water resistance, and impact resistance. Moreover, when the board 20 is formed of foamed synthetic resin, the board 20 can achieve further weight reduction. Even when the board 20 is formed of foamed synthetic resin, since the board 20 is covered with the polyurea resin layer 24, the scaffold board 100 having high strength, excellent water resistance, and excellent impact resistance can be achieved. The cases where the board 20 is formed of wood may include a case where an existing scaffold board formed of wood is covered with the polyurea resin layer 24 and repaired.

The scaffold body 10 in this example has a primer coating 22 on the surfaces of the board 20. The polyurea resin layer 24 is formed on a surface of the primer coating 22. The primer coating 22 is a film for enhancing adhesion between the board 20 and the polyurea resin layer 24 and is, for example, modified epoxy resin. The modified epoxy resin may be a urethane modified epoxy resin composition or an alkanolamine modified epoxy resin composition. However, the polyurea resin layer 24 may be formed directly on the board 20.

The polyurea resin layer 24 is, for example, a resin layer having a urea bond formed by a chemical reaction of isocyanate and an amino group. As an example, polyurea resin is formed by reacting a polyisocyanate compound and a polyamine compound. The thickness of the polyurea resin layer 24 may be 5 mm or less.

The polyurea resin layer 24 is desirably formed on all the surfaces of the board 20. The polyurea resin layer 24 covers all of the front surface 16, the back surface 17, and side surfaces of the scaffold body 10. The side surface refers to a surface between the front surface 16 and the back surface 17. The polyurea resin layer 24 covering the entire board 20 can prevent the polyurea resin layer 24 from peeling off from the side surfaces. In particular, when the primer coating 22 is omitted, it is desirable that the polyurea resin layer 24 cover the entire board 20 to prevent peeling.

In the case where the board 20 has uneven portions 14 on the front surface 16 side or has reinforcement parts in a form of parallel crosses on the back surface 17 side, the polyurea resin layer 24 may cover all of the uneven portions 14 and the reinforcement parts in the form of parallel crosses. Furthermore, surfaces of the hook members 12 may also be covered with the polyurea resin layer 24.

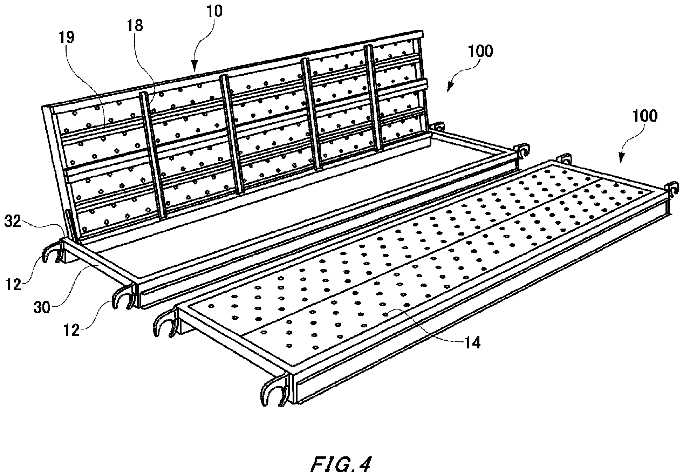

Fig. 4 is a view illustrating a fully-retractable scaffold board 100. In the scaffold board 100 illustrated in Fig. 4, the scaffold body 10 is pivotably attached to a frame 30. A pivot axis of the scaffold body 10 is provided in a direction along a longitudinal direction of the scaffold board 100. The scaffold body 10 may be pivotably attached to the frame 30 via a pivot support 32. The hook members 12 may be provided in ends of the frame 30 in the longitudinal direction of the scaffold board 100. Uneven portions 14 are formed on the front surface 16 of the scaffold body 10 of this example. On the back surface 17 side of the scaffold body 10, reinforcement cross beams 18 and reinforcement vertical beams 19 which are framed in the form of parallel crosses may be provided as reinforcement parts.

The polyurea resin layer 24 may be provided on at least the front surface 16 of surfaces of the scaffold body 10 also in the fully-retractable scaffold board 100 as in this example. In the present example, the polyurea resin layer 24 may be provided on all surfaces of the scaffold body 10, and surfaces of the frame 30 may also be covered with the polyurea resin layer 24.

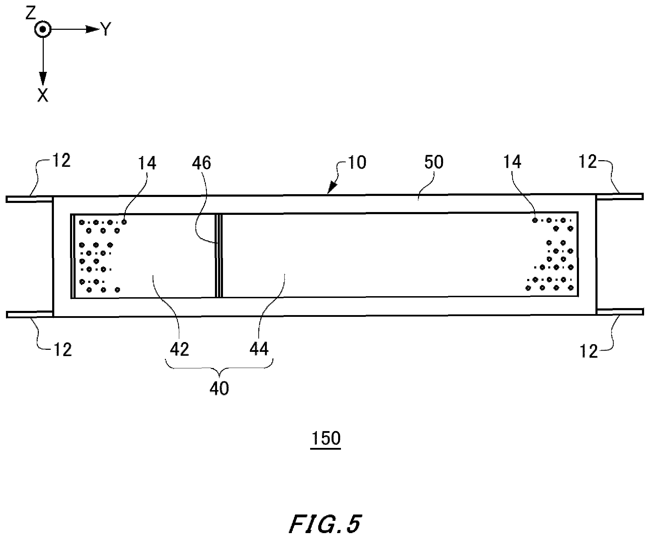

Fig. 5 is a plan view illustrating a scaffold board 150 of a second embodiment of the present invention. In the first embodiment described above, the case where the polyurea resin layer 24 is formed on the surface of the board 20 via the primer coating 22, or the case where the polyurea resin layer 24 is formed directly on the surface of the board 20 is described. However, the present invention is not limited to this case. The scaffold board 150 of this example has a sheet member 40 including a coating layer of polyurea resin attached to a surface of a board 50.

The scaffold board 150 includes a scaffold body 10 and hook members 12. The scaffold body 10 forms a board 50 serving as a scaffold. The scaffold board 150 includes the sheet member 40. The sheet member 40 is detachably attached to the surface of the board 50. Uneven portions 14 for slip prevention may be provided on a front surface of the sheet member 40. The sheet member 40 may include a first sheet member 42 and a second sheet member 44. The first sheet member 42 and the second sheet member 44 may be pivotably connected at sides 46 opposing each other. Thus, the angle which the first sheet member 42 and the second sheet member 44 make can be changed.

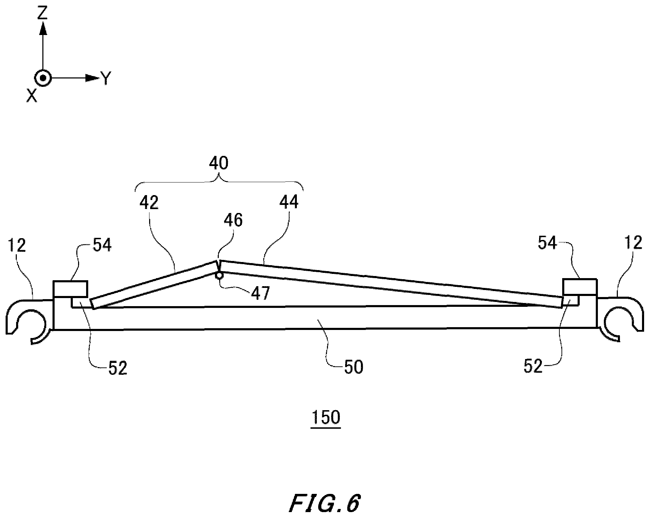

Fig. 6 is a view illustrating a case where the sheet member 40 is inserted into the scaffold board 150 of the second embodiment. The board 50 may be formed of a metal material such as aluminum material or steel material, foamed synthetic resin, or wood. A back surface side of the board 50 may be provided with reinforcement parts in the form of parallel crosses as illustrated in Fig. 4.

The sheet member 40 is attached to a front surface of the board 50. The sheet member 40 may be attached to the front surface of the board 50 by an adhesive layer. However, in order to facilitate attachment and detachment of the sheet member 40 when the sheet member 40 is deteriorated, the board 50 desirably has guide mechanisms 52 into which the sheet member 40 is inserted. The guide mechanisms 52 may be trenches extending in a width direction (X direction) at both ends in a longitudinal direction of the board 50. In this example, the sheet member 40 is attached to the front surface of the board 50 by inserting both ends in a longitudinal direction of the sheet member 40 into the corresponding guide mechanisms 52.

In the present example, the sheet member 40 is configured by the first sheet member 42 and the second sheet member 44 being connected by a hinge mechanism 47 at the sides 46 opposing each other. When the sheet member 40 is attached to the board 50, the first sheet member 42 and the second sheet member 44 may be disposed on the front surface of the board 50 in a state that the sheet member 40 is bent by the hinge mechanism 47. By extending the first sheet member 42 and the second sheet member 44 so as to be parallel to each other along the front surface of the board 50, both the ends in the longitudinal direction of the sheet member 40 are inserted into gaps of the guide mechanisms 52. In this example, the position of the hinge mechanism 47 is provided from a center in the longitudinal direction of the sheet member 40 so that the area of the first sheet member 42 is smaller than the area of the second sheet member 44. However, the position of the hinge mechanism 47 is not limited to this case.

The sheet member 40 is not limited to one in which the first sheet member 42 and the second sheet member 44 are connected by the hinge mechanism 47. In one example, by inserting one sheet member 40 in a plate form along the surface of the board 50 from the width direction (X direction) of the scaffold body 10, both the ends may be inserted in and fixed to the guide mechanisms 52. Alternatively, the sheet member 40 may be fixed by fixing members 54 after the sheet member 40 in a plate form is disposed on the front surface of the board 50. The sheet member 40 is sandwiched and fixed between the front surface of the board 50 and back surfaces of the fixing members 54. The fixing members 54 may be bolted to the board 50.

The thickness of the sheet member 40 in an area exposed on the front surface of the scaffold body 10 may be formed thick as compared to the thickness of a portion inserted into the guide mechanism 52. The difference between the height of a surface of the sheet member 40 and the height of an uppermost surface of the board 50 may be equal to or less than a predetermined value. More preferably, the height of the surface of the sheet member 40 and the height of the uppermost surface of the board 50 may be the same. As a result, since there is no step on the scaffold board 150, it becomes easy to work on the scaffold board 150.

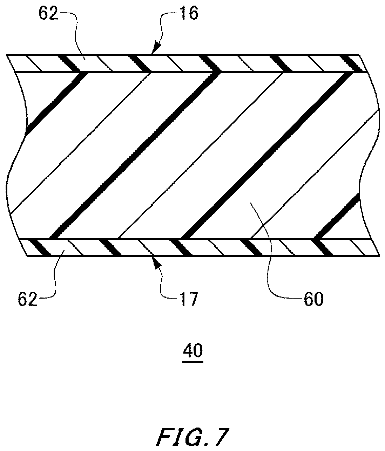

Fig. 7 is a view illustrating a partial cross-sectional view of the sheet member 40. In Fig. 7, a cross section along an X-axis direction of the sheet member 40 is illustrated. The sheet member 40 has a base material 60 and a coating layer 62. The base material 60 is formed of foamed synthetic resin.

The synthetic resin which forms the base material 60 as an example is a polymer compound. As a more specific example, the synthetic resin forming the base material 60 is formed of one or more materials selected from polystyrene, polyethylene, polypropylene, and polyurethane. The foamed synthetic resin refers to one in which fine bubbles are dispersed in these synthetic resins. In one embodiment, the base material 60 is formed of foam polystyrene (expanded polystyrene).

The coating layer 62 is formed to cover a surface of the base material 60. The coating layer 62 is formed of polyurea resin. The coating layer 62 functions as a polyurea resin layer 24 covering at least a front surface 16 of the surface of the board 50. However, the sheet member 40 does not necessarily cover the entire front surface 16 of the board 50. Therefore, it is not necessary for the coating layer 62 to cover the entire front surface 16 of the board 50.

The coating layer 62 is preferably formed on all surfaces of the base material 60. That is, the coating layer 62 covers all of the front surface 16, the back surface 17, and side surfaces of the sheet member 40. The side surface refers to a surface between the front surface 16 and the back surface 17. The thickness of the coating layer 62 is smaller than the thickness of the base material 60. As an example, the thickness of the base material 60 is 3 cm or more, and a thickness T1 of the coating layer 62 is 5 mm or less.

The base material 60 is quite lightweight because it is formed of foamed synthetic resin. In addition, since the coating layer 62 is formed of polyurea resin, the coating layer 62 has high strength, excellent water resistance, and excellent impact resistance. Therefore, by coating the surface of the base material 60 with the coating layer 62, it is possible to provide the sheet member 40 which is ultra-lightweight and excellent in strength, water resistance, and impact resistance. With the scaffold board 150 of this example, since the sheet member 40 is detachably attached to the surface of the board 50, the scaffold board 150 can be used for a long time while maintaining an aesthetic appearance by replacing the sheet member 40 with a new one.

The sheet member 40 may further include a fiber sheet. The fiber sheet is provided between the base material 60 and the coating layer 62. The fiber sheet may have higher cutting strength than the coating layer 62. The fiber sheet may be a sheet containing carbon fibers formed by carbonizing fibers formed of a predetermined material. Further, the fiber sheet may be a basalt fiber sheet. The basalt fiber sheet is a sheet containing fibers formed by melting basalt.

The basalt fiber sheet is constituted mainly of silicon dioxide (SiO₂), and includes aluminum oxide (Al₂O₃), calcium oxide (CaO), magnesium oxide (MgO), sodium oxide (Na₂O), potassium oxide (K₂O), titanium oxide (TiO₂), iron oxide (Fe₂O₃ + FeO), and the like. The content ratios by weight ratio of the components are about 51 to 60% of SiO₂, about 14 to 19% of Al₂O₃, about 5 to 10% of CaO, about 3 to 6% of MgO, about 3 to 6% of Na₂O + K₂O, about 0 to 3% of TiO₂, and about 9 to 14% of Fe₂O₃ + FeO. The basalt fiber sheet may further contain other components.

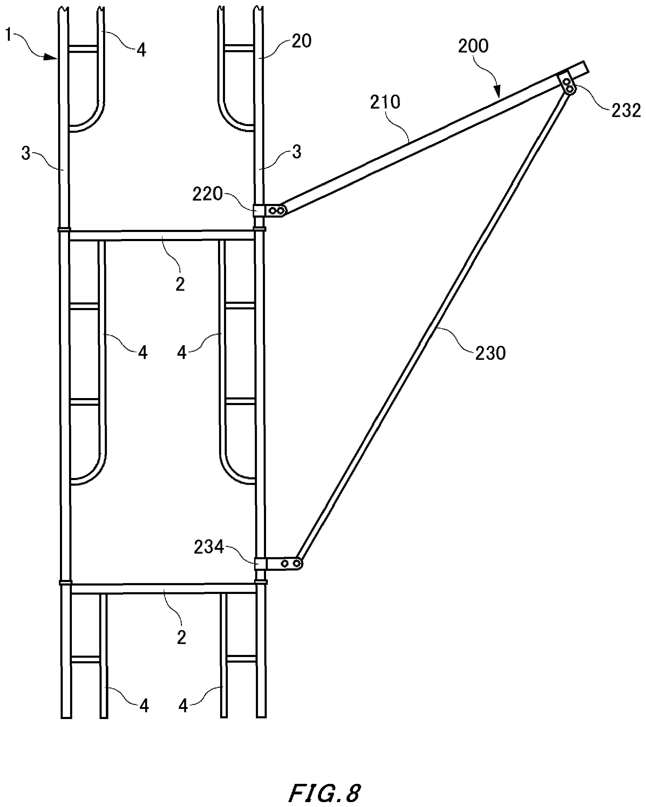

Fig. 8 is a view illustrating a falling object receiving device 200 of a third embodiment of the present invention. The falling object receiving device 200 is provided so as to project outward from a work space when working at a high place in the work space of the scaffold construction body 1 at a construction site or the like. The falling object receiving device 200 receives a falling object when an object falls from the work space to an outer space. This prevents objects from falling to the ground. The falling object receiving device 200 is called a morning glory device.

The falling object receiving device 200 includes a panel part (falling object receiving device panel) 210 and an attachment part 220. The panel part 210 projects from the scaffold construction body 1 toward an external space. The panel part 210 of this example includes a base material of foamed synthetic resin, and a coating layer of polyurea resin that covers a surface of the base material. The panel part is an example of a construction member provided in the scaffold structure 1.

The panel part 210 may be formed in a rectangular shape. However, the panel part 210 is not limited to this case and may have a triangular shape for a case of being attached to a corner portion of the scaffold construction body 1. The attachment part 220 attaches a proximal end side of the panel part 210 to the scaffold construction body 1. The attachment part 220 of this example attaches the proximal end side of the panel part 210 to the scaffold construction body 1 in a vertically pivotable manner. Further, supports 230 extending downward from both ends on a free end side (distal end side) of the falling object receiving device 200 may be provided in a vertically pivotable manner. The supports 230 determine a posture of the falling object receiving device 200.

A distal end of a support 230 and a distal end of the panel part 210 are connected via a connecting part 232. A proximal end of the support 230 is attached to the scaffold construction body 1 by an attachment part 234. In the present example, the attachment part 234 at the proximal end of the support 230 is attached to the scaffold construction body 1 below the attachment part 220 at a proximal end of the panel part 210. However, the present invention is not limited to this case, and the attachment part 234 at the proximal end of the support 230 may be attached to the scaffold construction body 1 above the attachment part 220 at the proximal end of the panel part 210.

The panel part 210 is attached and used in a posture inclined upward from a proximal end portion to a distal end portion in order to easily receive an object falling from above. However, during poor weather, in order to prevent from being swayed by the wind, the distal end portion may be moved in an upright direction so that the falling object receiving device 200 is stored in a posture in which the falling object receiving device 200 is overlapped on a side surface of the work space. When the falling object receiving device 200 is stored, at least one of the attachment part 220 and the attachment part 234 may be moved along a vertical member 3 to change the posture of the falling object receiving device 200.

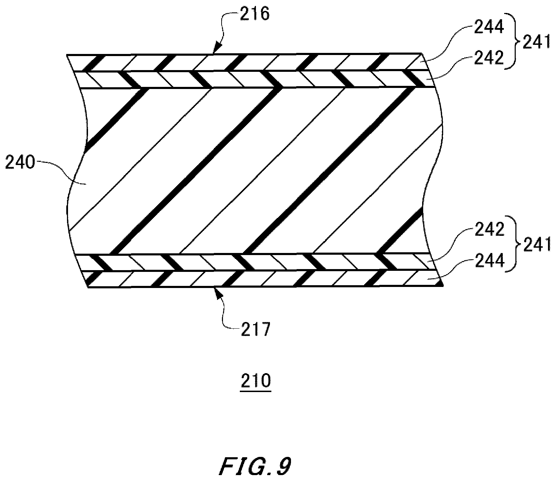

Fig. 9 is a view illustrating a partial cross-sectional view of the falling object receiving device panel. The panel part 210, which is a falling object receiving device panel, includes a base material 240 and a coating layer 241. The coating layer 241 covers the base material 240. In the present example, the coating layer 241 includes a first polyurea resin layer 242 and a second polyurea resin layer 244. However, unlike this example, the panel part 210 may include a coating layer 241 of one layer of polyurea resin. The base material 240 is formed of foamed synthetic resin. The synthetic resin which forms the base material 60 as an example is a polymer compound. As a more specific example, the synthetic resin forming the base material 60 is formed of one or more materials selected from polystyrene, polyethylene, polypropylene, and polyurethane.

The coating layer 241 is formed of polyurea resin. The coating layer 241 is preferably formed on all surfaces of the base material 240. The coating layer 241 covers all of a front surface 216, a back surface 217, and side surfaces of the panel part 210. The side surface refers to a surface between the front surface 216 and the back surface 217. The first polyurea resin layer 242 is applied to a surface of the base material 240 and exhibits a first elongation rate. The second polyurea resin layer 244 is applied to a surface of the first polyurea resin layer 242 and exhibits a second elongation rate. The second elongation rate is high as compared to the first elongation rate.

The elongation rate of the polyurea resin can be changed depending on differences in structure and molecular weight of the polyisocyanate compound as the main component, and the type of the polyamine compound. The polyisocyanate compound may have an aromatic, aliphatic, or alicyclic structure, and a polyisocyanate compound obtained by blending them may also be used. For example, the elongation rate (elongation) of the polyurea resin (% ASTM standard D412) can be designed in the range of 30% or more and 950% or less. Therefore, the second elongation rate of the second polyurea resin layer 244 may be more than 1 time and not more than 30 times the first elongation rate of the first polyurea resin layer 242. In particular, the first elongation rate of the first polyurea resin layer 242 may be 200% or more and 400% or less, and the second elongation rate of the second polyurea resin layer 244 may be 500% or more and 800% or less.

As described above, by making the second elongation rate high as compared to the first elongation rate, impact absorption of the second polyurea resin layer 244 to be in direct contact with the falling object is enhanced. On the other hand, the first polyurea resin layer 242 can prevent a falling object having a sharp shape from penetrating through the coating layer 241 by adopting a hard resin layer having a low elongation rate.

The base material 240 is quite lightweight because it is formed of foamed synthetic resin. In addition, since the coating layer 241 is formed of polyurea resin, the coating layer 241 has high strength, excellent water resistance, and excellent impact resistance. Accordingly, by coating the surface of the base material 240 with the coating layer 241, it is possible to provide a falling object receiving device panel which is ultra-lightweight and excellent in strength, water resistance, and impact resistance. Therefore, a load of installing the falling object receiving device 200 can be reduced, and the number of parts such as supporting parts can be reduced along with weight reduction.

The panel part 210 may further include a fiber sheet. The fiber sheet is provided between the base material 240 and the coating layer 241. The fiber sheet may have higher cutting strength than the coating layer 241. The fiber sheet may be a sheet containing carbon fibers formed by carbonizing fibers formed of a predetermined material. Further, the fiber sheet may be a basalt fiber sheet. The basalt fiber sheet is a sheet containing fibers formed by melting basalt.

As mentioned above, although the present invention has been described using embodiments, the technical scope of the present invention is not limited to the range as described in the embodiments described above. It is apparent to those skilled in the art that various changes or modifications can be added to the embodiments. It is also apparent from the scope of the claims that embodiments added with such modifications or improvements can be included in the technical scope of the present invention.

### [REFERENCE SIGNS LIST]

- 1: Scaffold construction body
- 2: Cross member
- 3: Vertical member
- 4: Reinforcement member
- 10: Scaffold body
- 12: Hook member
- 14: Uneven portion
- 16: Front surface
- 17: Back surface
- 18: Reinforcement cross beam
- 19: Reinforcement vertical beam
- 20: Board
- 22: Primer coating
- 24: Polyurea resin layer
- 30: Frame
- 32: Pivot support
- 40: Sheet member
- 42: First sheet member
- 44: Second sheet member
- 46: Side
- 47: Hinge mechanism
- 50: Board
- 52: Guide mechanism
- 54: Fixing member
- 60: Base material
- 62: Coating layer
- 100: Scaffold board
- 150: Scaffold board
- 200: Falling object receiving device
- 210: Panel part
- 216: Front surface
- 217: Back surface
- 220: Attachment part
- 230: Support
- 232: Connecting part
- 234: Attachment part
- 240: Base material
- 241: Coating layer
- 242: First polyurea resin layer
- 244: Second polyurea resin layer

## Claims

1. A scaffold board comprising:
a board serving as a scaffold; and
a polyurea resin layer that covers at least a front surface of surfaces of the board.

2. The scaffold board according to claim 1, wherein
the board is formed of a metal material, foamed synthetic resin or wood.

3. The scaffold board according to claim 2, wherein
the board is formed of an aluminum material or a steel material.

4. The scaffold board according to claim 2, wherein:
the board is formed of the foamed synthetic resin; and
the foamed synthetic resin is provided with a hook member formed of metal or reinforced plastic so as to fix the board to an external scaffold construction body.

5. The scaffold board according to any one of claims 2 to 4, wherein:
the scaffold board further comprises a primer coating formed on a surface of the metal material, the foamed synthetic resin or the wood; and
the polyurea resin layer is formed on a surface of the primer coating.

6. The scaffold board according to any one of claims 1 to 5, wherein
the scaffold board comprises a sheet member removably attached to a surface of the board;
the sheet member includes a base material of foamed synthetic resin and a coating layer covering a surface of the base material; and
the polyurea resin layer is formed as the coating layer.

7. The scaffold board according to claim 6, wherein
uneven portions for slip prevention are formed on a front surface of the sheet member.

8. The scaffold board according to claim 6 or 7, wherein
the coating layer is formed on all surfaces of the base material.

9. The scaffold board according to any one of claims 6 to 8, wherein
the board includes a guide mechanism, the sheet member inserted into the guide mechanism.

10. A falling object receiving device, comprising:
a panel part that projects from a scaffold construction body toward an external space; and
an attachment part that attaches a proximal end side of the panel part to the scaffold construction body, wherein
the panel part includes a base material of foamed synthetic resin and a coating layer that covers a surface of the base material, the coating layer formed of polyurea resin.

11. The falling object receiving device according to claim 10, wherein
the attachment part attaches the proximal end side of the panel part to the scaffold construction body in a vertically pivotable manner.

12. The falling object receiving device according to claim 10 or 11, wherein
the coating layer is formed on all surfaces of the base material of the panel part.

13. The falling object receiving device according to any one of claims 10 to 12, wherein
the coating layer includes a first polyurea resin layer applied to the surface of the base material and exhibiting a first elongation rate, and a second polyurea resin layer applied to a surface of the first polyurea resin layer and exhibiting a second elongation rate higher than the first elongation rate.

14. A falling object receiving device panel that projects from a scaffold construction body toward an external space, wherein
the falling object receiving device panel comprises:
a base material of foamed synthetic resin; and
a coating layer that covers a surface of the base material, the coating layer formed of polyurea resin.

## Amended claims

### Amended claims under Art. 19.1 PCT

1. (amended) A construction member provided on a scaffold construction body, comprising:
a base material of foamed synthetic resin; and
a coating layer of polyurea resin covering a surface of the base material.

2. (amended) The construction member according to claim 1, comprising a fiber sheet between the base material and the coating layer.

3. (amended) The construction member according to claim 1 or 2, wherein the coating layer includes:
a first polyurea resin layer applied to the surface of the base material and exhibiting a first elongation rate; and
a second polyurea resin layer applied to a surface of the first polyurea resin layer and exhibiting a second elongation rate higher than the first elongation rate.

4. (amended) The construction member according to claim 3, wherein
the construction member is a scaffold board attached to the scaffold construction body,
the base material forms a board serving as a scaffold, and
the coating layer covers a surface of the board.

5. (amended) The construction member according to claim 4, wherein the base material of the foamed synthetic resin is provided with a hook member formed of metal or reinforced plastic so as to fix the board to the scaffold construction body on an outside.

6. (amended) The construction member according to claim 4 or 5, further comprising a primer coating formed on the surface of the base material, wherein
the coating layer is formed on a surface of the primer coating.

7. (amended) The construction member according to any one of claims 4 to 6, comprising a sheet member removably attached to the surface of the board, wherein
the sheet member includes a sheet member base material of foamed synthetic resin, and a sheet member coating layer covering a surface of the sheet member base material.

8. (amended) The construction member according to claim 7, wherein the sheet member includes a first sheet member, a second sheet member, and a hinge mechanism, wherein
the first sheet member and the second sheet member are connected by the hinge mechanism at sides opposing each other.

9. (amended) The construction member according to claim 7 or 8, wherein uneven portions for slip prevention are formed on a front surface of the sheet member.

10. (amended) The construction member according to any one of claims 7 to 9, wherein the sheet member coating layer is formed on all surfaces of the sheet member base material.

11. (amended) The construction member according to any one of claims 7 to 10, wherein the board has a guide mechanism into which the sheet member is inserted.

12. (amended) The construction member according to claim 3, wherein the construction member is a falling object receiving device panel that projects from the scaffold construction body toward an external space.

13. (amended) The construction member according to claim 12, wherein in the falling object receiving device panel, the coating layer is formed on all surfaces of the base material.

14. (amended) A falling object receiving device having as a falling object receiving device panel the construction member according to claim 12 or 13 that projects from the scaffold construction body toward an external space, the device comprising
an attachment part that attaches a proximal end side of the falling object receiving device panel to the scaffold construction body.

15. (added) The falling object receiving device according to claim 14, wherein the attachment part attaches the proximal end side of the falling object receiving device panel to the scaffold construction body in a vertically pivotable manner.
